# EUROPEAN PATENT APPLICATION

(11) **EP 4 715 511 A1**
(43) Date of publication of application: **25.03.2026**
(21) Application number: 25804569.9
(22) Date of filing: 23.05.2025
(51) Int. Cl.: G05D 1/622

(54) **OBSTACLE AVOIDANCE SYSTEM AND REAL-TIME OBSTACLE AVOIDANCE METHOD FOR MOBILE MANIPULATOR**

(30) Priority: 14.06.2024 CN 202410765497
(71) Applicant: Yaoshi Robotics (Shanghai) Co., Ltd., Shanghai 201306 (CN); Shanghai Sage Intelligent Technology Co., Ltd., Shanghai 201109 (CN)
(72) Inventor: WEI, Kun, Pudong New Area, Shanghai 201306 (CN); ZHANG, Jianzheng, Pudong New Area, Shanghai 201306 (CN); DONG, Yi, Pudong New Area, Shanghai 201306 (CN); ZOU, Jinpei, Pudong New Area, Shanghai 201306 (CN)
(74) Representative: Monteiro Alves, Inês
(86) International application number: PCT/CN2025/096737
(87) International publication number: WO 2025/256383

(57) **Abstract**

Provided by the present invention are a mobile operation robot obstacle avoidance system and a real-time obstacle avoidance method. A first embedded platform is configured for acquiring first sensing data output by a sensor, and executing a real-time obstacle avoidance algorithm to generate obstacle avoidance data when acquiring the first sensing data. The robot control platform is configured for acquiring all sensing data output by the sensor and the obstacle avoidance data so as to execute an overall control function of the robot and generate decision data. The second embedded platform is configured for immediately executing a robot motion control algorithm upon receiving the obstacle avoidance data so as to output an action instruction required for obstacle avoidance according to the obstacle avoidance data, to enable a motor configured for performing motion action in the robot to execute the action instruction to complete real-time obstacle avoidance; and executing the robot motion control algorithm upon receiving the decision data so as to drive the motor to perform motion action adjustment according to the decision data. Therefore, the obstacle avoidance reliability and response speed of the robot are improved, and the requirements of industrial scenarios are met.

## Description

### TECHNICAL FIELD

The present invention relates to the technical field of obstacle avoidance of mobile robots, and specifically relates to a mobile operation robot obstacle avoidance system and a real-time obstacle avoidance method.

### BACKGROUND ART

The mobile robot is applied to an industrial manufacturing scene, and its traveling behavior is restricted by the conditions of an industrial production line. Only the robot that meets the production rhythm requirement and operation requirement of the production line can be successfully applied to such a scene.

However, under normal circumstances, a robot control platform is based on an x86 platform structure, and its real-time performance is poor. After sensor data of the robot is input, complex and time-consuming calculation needs to be performed to obtain a perception result, so that the robot control platform can decide accordingly. This process not only causes tight computing resources of a core controller of the robot, but also causes a certain untimely response situation in the aspects of response speed, obstacle recognition, and obstacle avoidance operation of the robot when the robot travels at a high speed, which may cause collision or obstacle avoidance failure of the robot, thereby causing loss and affecting industrial production.

Therefore, a new solution for real-time obstacle avoidance of the robot is needed.

### SUMMARY

In view of this, embodiments of the present specification provide a mobile operation robot obstacle avoidance system and a real-time obstacle avoidance method, so that the mobile operation robot is applied to the industrial manufacturing scene and meets the production rhythm requirement and operation requirement of the production line.

The embodiments of the specification provide the following technical solutions.

The embodiments of the specification provide a robot obstacle avoidance system, including:
a first embedded platform, a second embedded platform, and a robot control platform, wherein the first embedded platform is communicatively connected to the robot control platform and the second embedded platform. The first embedded platform is configured for executing a real-time obstacle avoidance algorithm and generating obstacle avoidance data; the robot control platform is configured for executing overall control functions of a robot and for generating decision data; and the second embedded platform is configured for executing a robot motion control algorithm according to the obstacle avoidance data and the decision data so that the robot performs a motion operation.

The first embedded platform is configured for acquiring first sensing data output by a sensor, and executing a real-time obstacle avoidance algorithm to generate obstacle avoidance data when acquiring the first sensing data, wherein the first sensing data includes obstacle feature data. The second embedded platform is configured for immediately executing a robot motion control algorithm upon receiving the obstacle avoidance data so as to output an action instruction required for obstacle avoidance according to the obstacle avoidance data, to enable a motor configured for performing motion action in the robot to execute the action instruction to complete real-time obstacle avoidance, and for executing the robot motion control algorithm upon receiving the decision data so as to drive the motor to perform motion action adjustment according to the decision data.

The embodiments of the specification further provide a robot real-time obstacle avoidance method, and the robot real-time obstacle avoidance method includes:
the first embedded platform determining that the robot and an obstacle are in an emergency obstacle avoidance state according to first sensing data, then generating obstacle avoidance data within a detection range of the robot, and transmitting an emergency avoidance instruction or a deceleration instruction to the second embedded platform to control, through the second embedded platform, a motor driver to enable the robot to perform avoidance or deceleration, wherein the first sensing data include obstacle feature data, and the obstacle feature data include obstacle contour edge data and distance information data to the obstacle; and
determining, a process of dynamically planning travel of the robot, a running state between the robot and the obstacle according to a tangential direction along an obstacle contour edge detected by the sensor, respectively detecting distances between tangents of edges on both sides of the obstacle and a sensor origin of the robot, and an included angle between the tangents of edges on both sides of the obstacle and the robot, and determining whether the robot and the obstacle are in the emergency obstacle avoidance state or the normal operation obstacle avoidance state so as to execute an obstacle avoidance decision.

Compared with the prior art, at least one of the above technical solutions adopted by the embodiments of the specification is capable of achieving at least the following beneficial effects.

The present invention utilizes a strong real-time characteristic of an embedded hardware platform, adopts the proposed real-time obstacle avoidance method (algorithm strategy) to generate obstacle avoidance information in real time, and directly transmits the real-time obstacle avoidance information to a second embedded platform through a first embedded platform to immediately execute an instruction, thereby improving dynamic obstacle avoidance performance of the robot and enhancing safety. The real-time obstacle avoidance information generated by the first embedded platform is transmitted to a robot control platform, which can still provide a basis for navigation trajectory planning and other aspects of the robot. Decision data generated by the robot control platform are transmitted to the second embedded platform to timely correct a traveling route, thereby improving obstacle avoidance reliability and obstacle avoidance response speed of the robot, and satisfying the requirements for high safety and high reliability of the robot in a scene where the robot travels and operates at a high speed in an industrial scene.

### BRIEF DESCRIPTION OF DRAWINGS

In order to more clearly illustrate the technical solutions of the embodiments of the present invention, the drawings used in the embodiments are briefly introduced below. It is apparent that the drawings described below are merely some embodiments of the present invention, and those ordinarily skilled in the art can obtain other drawings based on these drawings without inventive efforts.
FIG. 1 is a schematic diagram of a hardware platform of a mobile operation robot obstacle avoidance system provided by the present invention;
FIG. 2 is a schematic diagram of a sensor signal data transmission channel provided by the present invention;
FIG. 3 is a scene diagram of a tangential detection method for obstacle contours captured by a sensor provided by the present invention;
FIG. 4 is a scene diagram of real-time tangential detection and processing of an obstacle contour provided by the present invention;
FIG. 5 is a flowchart of a mobile operation robot real-time obstacle avoidance method provided by the present invention;
FIG. 6 is a schematic diagram of determining distance and number of obstacles provided by the present invention; and
FIG. 7 is a schematic diagram of determining a traveling direction of a mobile operation robot provided by the present invention.

### DETAILED DESCRIPTION OF EMBODIMENTS

The embodiments of the present invention are described in detail below with reference to the drawings.

The embodiments of the present invention are described below through specific concrete examples, and those skilled in the art can easily understand other advantages and effects of the present invention based on the contents disclosed in the present specification. Obviously, the described embodiments are only a part of the embodiments of the present invention, and not all of them. The present invention can also be implemented or applied through other different specific embodiments, and various modifications or changes can be made to the details in the present specification based on different viewpoints and applications without departing from the spirit of the present invention. It needs to be noted that, when there is no conflict, the following embodiments and the features in the embodiments can be combined with each other. Based on the embodiments in the present invention, all other embodiments obtained by those of ordinary skill in the art without making inventive efforts are within the scope of protection of the present invention.

It is to be noted that the various aspects of the embodiments described below fall within the scope of the appended claims. It should be apparent that the aspects described herein can be embodied in a wide variety of forms, and any specific structure and/or function described herein are merely illustrative. Based on the present invention, those skilled in the art should understand that one aspect described herein can be implemented independently of any other aspect, and two or more of these aspects can be combined in various ways. For example, any number and aspects described herein can be used to implement the device and/or practice the method. In addition, the device can be implemented and/or the method can be practiced by using other structures and/or functionalities except one or more of the aspects described herein.

It should also be noted that the drawings provided in the following embodiments merely illustrate the basic concept of the present invention in a schematic manner. The drawings only show components related to the present invention and are not drawn according to the number, shape, and size of actual components. The shape, quantity, and proportion of each component in actual implementation can be changed arbitrarily, and the component layout form may also be more complicated.

In addition, specific details are provided in the following description to facilitate a thorough understanding of the examples. However, those skilled in the art will understand that the embodiments can be practiced without these specific details.

The mobile operation robot is applied to an industrial manufacturing scene, and its traveling behavior is restricted by the conditions of an industrial production line. Only the robot that meets the production rhythm requirement and operation requirement of the production line can be successfully applied to such a scene.

However, it is apparent that in such a scene, the reliability and performance of the mobile operation robot cannot meet the requirements of applying the robot to the industrial manufacturing scene.

Under normal circumstances, a robot control platform is based on an x86 platform structure and is a non-real-time system. After sensor data of the robot is input, complex and time-consuming calculation needs to be performed to obtain a perception result, so that the robot control platform can make a decision accordingly. This process not only causes tight computing resources of a core controller of the robot, but also causes a certain untimely response situation in the aspects of response speed, obstacle recognition, and obstacle avoidance operation of the robot when the robot travels at a high speed, which may cause collision or obstacle avoidance failure of the robot, thereby causing loss and affecting industrial production.

The inventor finds that in such a scene, very high requirements are proposed for the reliability and performance of the robot. The specific performance is as described below.

The robot needs to have a high traveling speed to meet the requirements of the production rhythm of the production line. For example, for the requirement of the material transfer rhythm on the production line, the robot cannot meet the requirement if its traveling speed is slow.

The robot needs to have a rapid response capability, such as a rapid obstacle avoidance capability and an ability to plan a traveling route in advance, especially an ability to dynamically plan and adjust the traveling route. In many cases, the production workshop is a mixed operation scene of equipment, people, and mobile devices, when the mobile robot travels and operates in such a complex and dynamically changing scene with a high traveling speed at the same time, a high requirement is proposed for the obstacle avoidance response speed of the robot, because whether the robot can successfully avoid an obstacle or make an obstacle avoidance response in time relates to the problem of production safety.

Therefore, a system or method capable of rapidly identifying and rapidly deciding on obstacles is needed, so that when the robot travels at a high speed in a complex and dynamically changing scene, the robot can timely, rapidly, and reliably deal with an obstacle situation, especially the avoidance of a sudden obstacle, to ensure sufficient safety.

The present invention, under this background, provides a real-time mobile operation robot obstacle avoidance system and a real-time obstacle avoidance method, having simple and effective characteristics.

Based on this, embodiments of the present specification provide a new solution for robot obstacle avoidance: utilizing a strong real-time characteristic of an embedded hardware platform, adopting the proposed real-time obstacle avoidance method (algorithm strategy) to generate obstacle avoidance information in real time, and directly transmitting the real-time obstacle avoidance information to a second embedded platform through a first embedded platform to immediately execute an instruction, thereby improving dynamic obstacle avoidance performance of the robot and enhancing safety. The real-time obstacle avoidance information generated by the first embedded platform is transmitted to a robot control platform, which can still provide a basis for navigation trajectory planning and other aspects of the robot. Decision data generated by the robot control platform are transmitted to the second embedded platform to timely correct a traveling route, thereby improving obstacle avoidance reliability and obstacle avoidance response speed of the robot, and satisfying the requirements for high safety and high reliability of the robot in a scene where the robot travels and operates at a high speed in an industrial scene.

With reference to the drawings, the technical solutions provided in embodiments of the present invention are described.

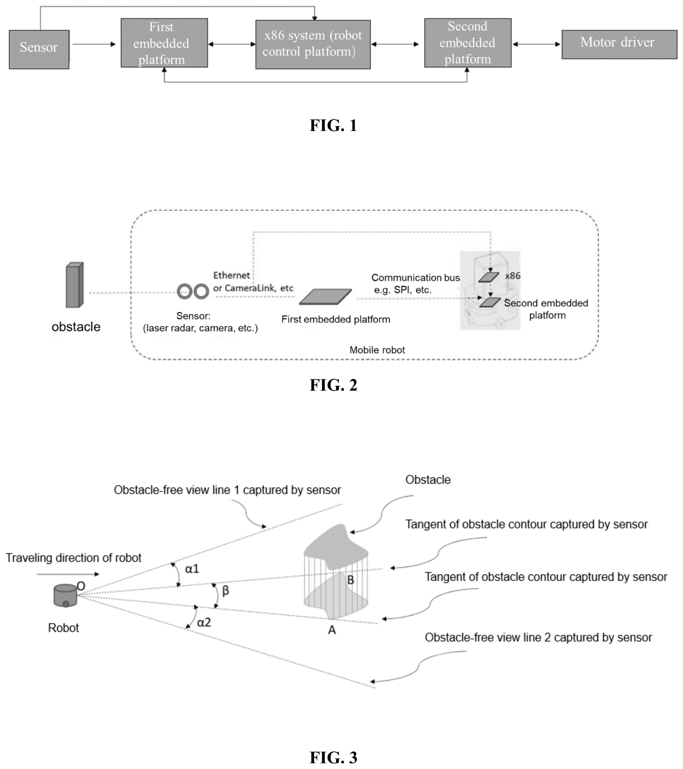

FIG. 1 is a hardware platform of the present invention, specifically an "x86 + dual embedded hardware" platform. An x86 platform (that is, a robot control platform) runs a robot operating system and a robot control system. A first embedded hardware platform (corresponding to a first embedded platform) performs real-time obstacle avoidance algorithm processing and has rapid and real-time characteristics. The first embedded hardware platform and the x86 platform perform data communication and share RAM or data bus communication (that is, the first embedded platform and the robot control platform communicate through RAM or a data bus).

The first embedded hardware platform communicates with a second embedded platform (which performs the robot motion control algorithm processing).

Specifically, the robot obstacle avoidance system includes the first embedded platform, the second embedded platform, and the robot control platform.

The first embedded platform is communicatively connected to the robot control platform and the second embedded platform, specifically performing data transmission through a communication bus, that is, SPI (serial peripheral interface) communication. The first embedded platform is configured for executing a real-time obstacle avoidance algorithm and generating obstacle avoidance data; the robot control platform is configured for executing overall control functions of robot perception, navigation, and decision, and for generating decision data; and the second embedded platform is configured for executing a robot motion control algorithm according to the obstacle avoidance data and the decision data so that the robot performs a motion operation.

The first embedded platform is configured for acquiring first sensing data output by a sensor, wherein the first sensing data includes obstacle feature data, and for executing a real-time obstacle avoidance algorithm to generate obstacle avoidance data when acquiring the first sensing data. The robot control platform is configured for acquiring all sensing data output by the sensor and the obstacle avoidance data, and generating decision data after acquiring the all sensing data and the obstacle avoidance data, wherein the all sensing data includes the first sensing data and other sensing data except the first sensing data. The second embedded platform is configured for immediately executing a robot motion control algorithm upon receiving the obstacle avoidance data so as to output an action instruction required for obstacle avoidance according to the obstacle avoidance data, to enable a motor configured for performing motion action in the robot to execute the action instruction to complete real-time obstacle avoidance, and for executing the robot motion control algorithm upon receiving the decision data so as to drive the motor to perform motion action adjustment according to the decision data. All sensor data further includes obstacle shape, obstacle contour, and obstacle distance.

As shown in FIG. 2, the sensor can be a laser radar, a binocular camera, or both; or the sensor can be another type of sensor or a combination thereof, such as an ultrasonic sensor.

After the sensor captures obstacle information, it transmits data respectively to the first embedded platform and the x86 platform through its own sensor communication interfaces, such as Ethernet or CameraLink (that is, a serial communication protocol for the machine vision application field).

After the first embedded platform and the x86 platform receive the sensing data, corresponding processing is performed; however, due to the different data processing capabilities of the two platforms, the processing methods are also different.

The first embedded platform sends a processing result simultaneously to the x86 platform and the second embedded platform.

The second embedded platform receives the processing results from the x86 platform and the first embedded platform simultaneously.

Specifically, the first embedded platform is composed of a DSP+FPGA array, and the DSP performs mathematical calculations and processes tasks of real-time information data. The FPGA array is composed of multiple FPGA chips performing parallel computation simultaneously, which utilizes the parallel data processing capability of the FPGA to process feature data from the sensor in real time to improve real-time performance.

The second embedded platform is composed of a DSP core system and an industrial communication bus system, which is specially configured for processing and analyzing motion-control-type data from the first embedded platform and the x86 controller platform, and converting them into communication data instructions recognizable by hub motor drivers, robotic arm joint drivers, and the like of the mobile operation robot for issuance, so that related actuators perform motion control. The industrial communication bus is generally a CanOpen or EtherCat bus.

The processing result of the first embedded platform is more real-time and faster in response speed than that of the x86 platform, and will make a comprehensive judgment on whether to perform operations such as deceleration avoidance according to information such as rapid obstacle recognition, distance between the obstacle and the robot, speed of the robot, and traveling route of the robot, and will directly send an instruction to the second embedded platform; and the second embedded platform will immediately execute the instruction to improve safety. Meanwhile, the x86 platform receives the instruction and performs corresponding processing, such as changing a current traveling trajectory or traveling speed of the robot. Therefore, the obstacle avoidance instruction of the first embedded platform has the first priority or the highest priority because it has the fastest response capability. Before the processing result of the x86 platform is generated, the first embedded platform has already obtained a processing result. This can solve the problem that, because the x86 platform has a large processing and computing amount and a delayed response speed, during high-speed traveling of the robot, slow obstacle avoidance response or even failure of avoidance may cause collision risk or even safety problems.

During traveling of the robot, the sensor continuously detects obstacle conditions in the traveling direction.

The obstacle data detected by the sensor includes data such as obstacle shape, contour, and distance, and according to different computing and processing capabilities of hardware platforms, different scales of data are transmitted for processing.

The first embedded platform and the second embedded platform perform data transmission through a communication bus mode, for example, SPI communication.

The first embedded platform has a faster response speed than the robot control platform.

The obstacle avoidance data generated by the first embedded platform has a higher processing speed and a higher real-time obstacle avoidance level than the decision data generated by the robot control platform.

For example, the x86 platform has strong computing capability and low real-time performance, and processes all sensor signals.

However, the first embedded platform is only suitable for processing data with high real-time performance. Therefore, it does not receive all data from the sensor but only processes data having strong obstacle features. As shown in FIG. 3, the data are obstacle contour edge data, that is, data detected by the sensor in a tangential direction along the obstacle contour edge. The most important information is distance, such as distances between the two outermost edge points A and B of the obstacle and the sensor point 0 of the robot, and the included angle β.

Accordingly, although the first embedded hardware platform does not input all information data about the obstacle detected by the sensor, but only receives data in the tangential direction of the obstacle edge, the data still has strong features and can represent information such as the distance and size of the obstacle. After being processed by an embedded CPU, the data can still provide a basis for navigation trajectory planning of the robot. Of course, the fastest output result can also provide a basis for robot obstacle avoidance operations.

In addition, on one hand, the robot obtains the tangential distance and included angle of the contour of the front obstacle; on the other hand, detection data within an angle of extension of the two contour tangential directions, such as α1 and α2 shown in FIG. 3, are still acquired. The two sets of data are provided to the x86 platform of the robot for computation and decision-making, so as to control at which angular direction the robot will travel to avoid the front obstacle. Generally, under the premise that there is no second obstacle within the two angular ranges, the decision system tends to control the robot to travel toward the side having the larger angular range.

It should be noted that the tangential detection, processing, and decision-making method shown in FIG. 3 are continuously or dynamically performed during the traveling of the robot. During traveling, the robot continuously performs detection, judgment, and processing, which is a dynamic process.

In some embodiments, the first embedded platform processes obstacle feature data (such as strong obstacle feature data) in the sensor data to obtain obstacle avoidance data, wherein the obstacle feature data includes obstacle contour edge data and distance information data to the obstacle. The first embedded platform transmits the obstacle avoidance data to the robot control platform so that the robot control platform performs robot obstacle avoidance decision-making. The robot control platform generates decision data according to all sensor data and the obstacle avoidance data, wherein the all sensor data further include obstacle shape, obstacle contour, and obstacle distance. The obstacle avoidance decision includes enabling the robot, based on existing sensing data (such as obstacle avoidance data and all sensor data), to have a function of determining in advance whether there are subsequent obstacles in a traveling direction or planned route. If there are, the robot dynamically adjusts the traveling route in advance to avoid traveling in a region where continuous obstacles appear.

In some embodiments, when the robot is in an emergency obstacle avoidance state, for example, when the robot is traveling at a high speed and obstacle 1 is a moving obstacle suddenly appearing in the detection range of the robot, the first embedded platform, after identifying the obstacle, can determine the situation as high risk according to a decision algorithm, and will send an emergency avoidance instruction or deceleration instruction (that is, a priority obstacle avoidance instruction) to the second embedded platform to directly control the robot to perform emergency avoidance or deceleration stop to reduce collision risk.

In some embodiments, the first embedded platform transmits the generated obstacle avoidance data to the robot control platform. The robot control platform determines decision data corresponding to the obstacle and the navigation route planning of the robot, and outputs a normal operation obstacle avoidance instruction (including but not limited to changing the traveling route, adjusting the traveling direction, or traveling along the originally set route) to the second embedded platform to ensure real-time obstacle avoidance operation of the robot.

This application adopts an architectural design approach featuring two embedded platforms plus a control platform. It extracts key feature data from sensor data that characterizes the main features of obstacles (not all sensor data) to process on the first embedded platform (using only feature data to adapt to the computational capabilities of the first embedded platform, enabling faster and more real-time processing). After processing on the first embedded platform, control commands are directly sent to the second embedded platform for immediate execution, enhancing the robot's dynamic obstacle avoidance performance and improving safety. Based on the real-time obstacle avoidance information from the first embedded platform transmitted to the robot control platform, the robot control platform processes all sensor data to obtain more comprehensive and complete obstacle avoidance information for decision-making. The information data, more detailed than the obstacle avoidance information from the first embedded platform, is then transmitted to the second embedded platform to further adjust the robot's obstacle avoidance behavior, enhancing the reliability and response speed of obstacle avoidance for robot. This approach meets the high safety and reliability requirements for robots moving and operating at high speeds in industrial scenarios.

Additionally, the traditional method of determining the distance of obstacle by measuring the distance between the robot and the obstacle has a drawback that obstacles often have irregular shapes. When the sensor scans an obstacle, it receives a large amount of distance data, which comes from the surfaces of the obstacle facing the robot. Consequently, the robot control system must process this extensive distance information comprehensively to obtain the information that best indicates its accurate distance.

The present invention, by the method using the tangent lines of obstacle contours, determines the core information of obstacles by collecting only the distance information at the tangent lines of obstacle contours and the "field of view" angle formed by these tangent lines, significantly reducing the amount of sensor data collected and making it more suitable for processing on embedded platforms. Meanwhile, the complete sensing data of obstacles (including all surface distance information) is sent to the robot controller platform for processing. Since the controller platform is typically based on industrial computers and possesses robust data processing capabilities, it can handle the full data from sensors without any issue.

Specifically, the present invention proposes an obstacle avoidance judgment method using the tangent lines of obstacle contours, which involves three technical aspects.

1. When any obstacle is in front of the robot sensors, the sensors do not need to determine its shape but can instead assess only the "visual" angle size formed by the contour tangent lines to obtain the most valuable obstacle data. This approach allows the system to extract key and useful data from vast amounts of sensing data for processing. 2. The judgment of the distance from the robot to the obstacle is also based on the distance between the contour tangent lines of the obstacle and the robot sensors. This method eliminates vast amounts of unnecessary or invalid distance data from the obstacle surface to the robot (which may have depressions, protrusions, or irregularities). The present invention entirely disregards the obstacle shape, focusing only on its contour tangent lines and the distance information at those tangent lines. This is equivalent to extracting only the effective key information data, reducing the processing volume of sensing data and thereby conserving computational resources. 3. The method of detecting whether other obstacles exist within the expanded angle range based on contour tangent lines enables the robot to dynamically and swiftly identify obstacles during movement and dynamically adjust the driving route. This approach is more reliable than traditional methods that rely solely on the distance to obstacles, as this is a judgment approach based on whether there are obstacles within the "field of view", while the traditional method of judging based on distance is based on whether there are obstacles ahead and how far and how close they are.

In combination with the above embodiments, the present invention provides a robot real-time obstacle avoidance method. Specifically, the robot real-time obstacle avoidance method includes: the first embedded platform determining that the robot and an obstacle are in an emergency obstacle avoidance state according to first sensing data, then generating obstacle avoidance data within a detection range of the robot, and transmitting an emergency avoidance instruction or deceleration instruction to the second embedded platform to control, through the second embedded platform, a motor driver to enable the robot to perform avoidance or deceleration. The first sensing data includes obstacle feature data, and the obstacle feature data includes obstacle contour edge data.

During dynamic traveling of the robot, a running state between the robot and the obstacle is determined according to the tangential direction along the obstacle contour edge detected by the sensor. Distances between the tangents of edges on both sides of the obstacle and the sensor origin of the robot and the included angle between the tangents of edges on both sides of the obstacle and the robot are respectively detected to determine whether the robot and the obstacle are in an emergency obstacle avoidance state or a normal operation obstacle avoidance state, so as to execute an obstacle avoidance decision. Specifically, as described in FIG. 3, during dynamic traveling of the robot, whether an obstacle exists in front of the robot is determined by detecting the tangential edge of the obstacle contour. As detailed above, this will not be repeated here. Then, the traveling route and the like are dynamically adjusted to execute the robot obstacle avoidance decision.

The obstacle avoidance data is faster in processing speed than the decision data generated by the robot control platform, and the real-time obstacle avoidance level is higher. The obstacle avoidance data can be directly transmitted by the first embedded platform to the second embedded platform, for example, comprehensively judging whether to perform deceleration or avoidance operation according to information such as rapid recognition of the obstacle, distance from the robot, speed of the robot, and traveling route of the robot, and the second embedded platform immediately executes the instruction to improve safety. On the other hand, the obstacle avoidance data obtained by processing through the first embedded platform can still provide a basis for navigation trajectory planning of the robot. That is, the obstacle avoidance data obtained by processing through the first embedded platform is transmitted as intermediate data having higher real-time performance and faster response speed to the robot control platform to provide a basis for navigation trajectory planning of the robot.

The preferential obstacle avoidance instruction includes, but is not limited to, an emergency avoidance instruction or a deceleration stop instruction. The emergency obstacle avoidance state refers to that when the robot is traveling at a high speed, if obstacle 1 is a moving obstacle and suddenly appears in the detection range of the robot, after the first embedded platform recognizes it, the first embedded platform can judge it as high risk according to a decision algorithm, and send an emergency avoidance instruction or a deceleration instruction to the second embedded platform to directly control the robot to perform emergency avoidance or deceleration stop to reduce collision risk.

The appearance of the moving obstacle includes that the robot changes from no obstacle to suddenly appearing one obstacle, or the robot faces a distant obstacle and another obstacle suddenly appears at a closer distance from the robot.

In some embodiments, the first embedded platform transmits the generated obstacle avoidance data to the robot control platform. The robot control platform determines decision data corresponding to the obstacle and the navigation route planning of the robot, and the robot control platform outputs a normal operation obstacle avoidance instruction to the second embedded platform to ensure real-time obstacle avoidance operation of the robot. The normal operation obstacle avoidance instruction includes, but is not limited to, changing the traveling route, adjusting the traveling direction, and traveling along the originally set route. The corresponding decision data in the navigation route planning process includes, but is not limited to, traveling along the originally set route, changing the traveling route, and changing the traveling direction, that is, continuing to travel along the originally set route after slightly modifying the traveling route.

In some embodiments, when the first embedded platform determines according to obstacle feature data that the obstacle encountered by the robot changes from no obstacle to a first obstacle, or the obstacle encountered by the robot changes from one obstacle to a first obstacle and a second obstacle, the robot and the obstacle are determined to be in an emergency obstacle avoidance state, and the first obstacle is closer to the robot than the second obstacle.

In some embodiments, the first embedded platform determines, based on tangent data between the robot and the obstacle, that the robot encounters two obstacles; determines that, in a first detection angle range on one side of a first obstacle, a contour tangent of another obstacle exists; and determines that, on the other side of the first obstacle, a second detection angle exists and that no contour tangent of other obstacles exists within the second detection angle, wherein the first detection angle is smaller than the second detection angle. The first embedded platform determines first obstacle avoidance data as that the robot has a second obstacle along the direction of the first detection angle but no second obstacle exists along the direction of the second detection angle, and the first embedded platform transmits the first obstacle avoidance data to a robot control platform, and the robot control platform obtains a dynamically corrected traveling trajectory according to the first obstacle avoidance data. Each detection angle in the embodiments of the present specification is within a detection range of a robot sensor.

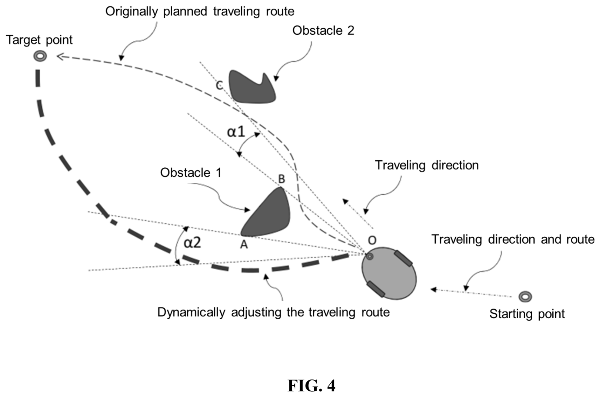

In combination with FIG. 3, as shown in FIG. 4, the robot has a known starting point and a final target point and has already planned a traveling route.

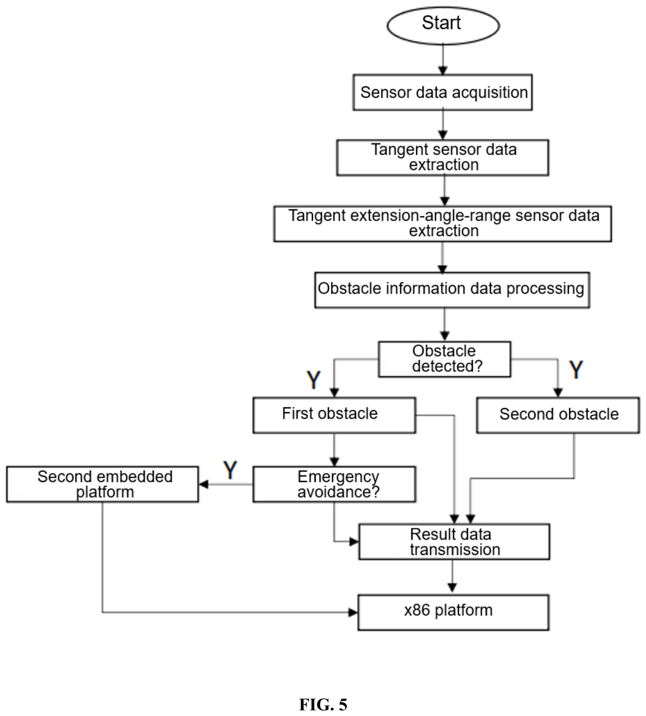

However, during the traveling process, obstacle 1 and obstacle 2 exist successively. In combination with FIG. 5, obstacle 1 is first detected, and according to the detected tangent data, such as OA, OB, and sensor data within extension angle ranges α1 and α2, it is found that within the detection angle range α1, another obstacle contour tangent is detected, resulting in that the angle range α1 is smaller than the angle range α2. Therefore, after calculation by the first embedded platform, the result obtained is that, along the traveling direction of the robot, there exists a second obstacle in front of the right side of the robot, and temporarily, no second obstacle is found in front of the left side of the robot. The result is sent to the x86 hardware platform robot controller as a basis for dynamically correcting the traveling trajectory. Therefore, when the robot encounters obstacle 1, the traveling trajectory is dynamically adjusted.

In addition, when the robot is traveling at a high speed, if obstacle 1 is a moving obstacle and suddenly appears in the detection range of the robot, after the first embedded platform recognizes it, the first embedded platform can judge it as high risk according to a decision algorithm, and send an emergency avoidance instruction or a deceleration instruction to the second embedded platform to directly control the robot to perform emergency avoidance or deceleration stop to reduce collision risk.

The above processing method enables the robot, based on existing sensing data, to have a function of determining in advance whether there are subsequent obstacles in a traveling direction or planned route. If there are, the robot dynamically adjusts the traveling route in advance to avoid traveling in a region where continuous obstacles appear.

Specifically, the robot control platform obtains a dynamically corrected traveling trajectory according to the first obstacle avoidance data.

In combination with FIG. 4, as shown in FIG. 5, even if the x86 platform determines through decision calculation that the difference between the angles α1 and α2 is within a certain allowable range and does not require a large correction to the original traveling path of the robot, the traveling path will also be dynamically slightly adjusted, so that the robot avoids obstacle 1 and continues to travel along the originally set route. When the robot continues to travel and obstacle 2 becomes the nearest direct obstacle (located on the planned route of the robot), the x86 platform performs decision calculation according to whether other obstacles exist in front. Alternatively, during the current traveling, when a part of obstacle 2 is located on the originally planned route but does not affect the main traveling route of the robot, the x86 platform dynamically slightly adjusts the traveling route to allow the robot to smoothly pass by obstacle 2. On the contrary, the robot control platform corrects the originally planned traveling route of the robot into a dynamically adjusted traveling route according to first priority processing data, as shown in FIG. 4. The first obstacle refers to an obstacle closest to the robot; the second obstacle refers to other obstacles detected by the robot within the extension angle range except the first obstacle.

That is, the robot control platform determines, according to the first obstacle avoidance data, that detection angles corresponding to each obstacle are all within a preset range, and the robot control platform determines that, when the robot encounters each obstacle, the robot travels according to a preset traveling route, but adjusts the robot from a first traveling direction to a corrected second traveling direction, wherein the second traveling direction is a small correction relative to the first traveling direction, so that the robot continues to travel along the preset traveling route after avoiding the obstacle; or, when the robot travels to encounter each obstacle, the robot control platform determines that the robot continues to travel according to the preset traveling route, wherein each obstacle includes the first obstacle or at least one second obstacle.

In some embodiments, when the first embedded platform detects at least one obstacle within a detection range of a robot, each obstacle relative to the robot is determined according to a distance size at a tangent position from the robot to the obstacle. It is determined whether tangents of other obstacles exist when the robot faces a first obstacle and respectively obtains a first distance and a second distance of tangents on two sides, and when each detection angle of the third detection angle and the fourth detection angle corresponding to the two sides of the obstacle is within an extended angle range. It is determined that a second obstacle exists when a tangent of another obstacle corresponds to a third distance or a fourth distance, wherein the third distance or the fourth distance is respectively greater than the first distance and the second distance corresponding to the first obstacle.

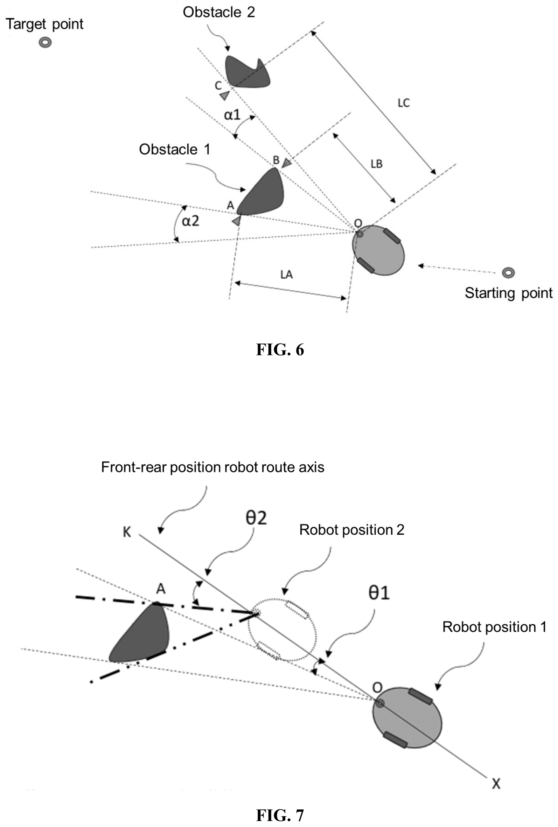

As shown in FIG. 6, in the first embedded platform, the robot determines the distance relationship between obstacles by mutually judging distances at tangent positions of obstacles (the distance between a position of a sensor 0 and a position of a tangent point of an obstacle). As shown in FIG. 6, LA, LB, and LC, when the robot determines that LA and LB are distances of two side edges of the same obstacle, the distance of the tangent point with another obstacle within an extension angle range, such as LC, can be used as a criterion for determining whether the obstacle 2 is a second obstacle.

In some embodiments, when the first embedded platform determines, according to obstacle contour edge data, that the robot faces one obstacle, and according to that a second traveling angle corresponding to a second position of the robot is greater than a first traveling angle corresponding to a first position, the robot control platform determines that the robot travels according to a preset traveling route.

The first travel angle or the second travel angle represents that the robot faces one side of the obstacle and travels correspondingly to the first position or the second position, the first travel angle is an angle between a tangent of one side corresponding to the first position of the robot and the robot travel axis, and the second travel angle is an angle between a tangent of one side corresponding to the second position of the robot and the robot travel axis.

The robot travel axis is represented as an axis between the first position and the second position when the robot is respectively located at the first position and the second position.

The robot is in straight-line traveling between the second position and the first position, and the second position is closer to the robot relative to the first position.

During traveling, the robot judges a situation of an obstacle in front in real time to determine whether a navigation adjustment strategy is appropriate.

As shown in FIG. 7, assuming that the robot is traveling, by comparing relevant data at two positions, position 1 and position 2, before and after, a posture adjustment angle is determined, and whether a posture adjustment result is appropriate is verified. For convenience of description, it is assumed that the traveling direction of the robot does not change during the traveling and is a straight-line traveling. In practice, during the traveling of the robot, the traveling path is dynamically changing, not necessarily always a straight-line traveling, and can often be adjusted in angle. However, from a real-time control perspective, when two adjacent positions before and after in traveling of the robot are close to a degree, it can be considered that the robot travels in a straight line during this period. As shown in FIG. 7, position 1 and position 2 are considered that the traveling angle of the robot does not change and that it is straight-line traveling. An axis between two positions of the robot is set as a KX line; for the same obstacle, at the two positions, an angle between a tangent on one side of the obstacle and the KX line is respectively θ1 and θ2.

When θ2 > θ1, the robot is traveling in a direction away from or avoiding the obstacle. Meanwhile, the angle θ2 can also be compared with other previous angles, and a trend of the angle change can also determine whether an obstacle avoidance decision measure of the robot is appropriate, thereby serving as one of the methods for verifying control effects.

The present invention utilizes a strong real-time characteristic of an embedded hardware platform, adopts a proposed real-time obstacle avoidance method (algorithm strategy), generates obstacle avoidance information in real time, improves the dynamic obstacle avoidance performance of a robot, and timely corrects a traveling route. Moreover, the present invention improves obstacle avoidance reliability and obstacle avoidance response speed of a robot, so as to meet the requirements of high safety and high reliability for the robot in industrial scenes requiring high-speed walking and high-speed operation.

The same or similar parts among the embodiments in the present specification can refer to each other, and each embodiment mainly describes differences from other embodiments. In particular, for product embodiments described later, since they correspond to the method, the description is relatively simple, and relevant parts can refer to part of the description of the system embodiments.

The above is only a specific embodiment of the present invention, but the scope of protection of the present invention is not limited thereto. Any person skilled in the art can easily envisage changes or substitutions within the technical scope disclosed in the present invention, which should be encompassed within the scope of protection of the present invention. Therefore, the scope of protection of the present invention shall be stated to be subject to the scope of protection of the claims.

## Claims

1. A robot obstacle avoidance system, **characterized by** comprising: a first embedded platform, a second embedded platform, and a robot control platform, wherein the first embedded platform is communicatively connected to the robot control platform and the second embedded platform; the first embedded platform is configured for executing a real-time obstacle avoidance algorithm and generating obstacle avoidance data; the robot control platform is configured for executing overall control functions of a robot and for generating decision data; the second embedded platform is configured for executing a robot motion control algorithm according to the obstacle avoidance data and the decision data so that the robot performs a motion operation; and
the first embedded platform is configured for acquiring first sensing data output by a sensor, and executing the real-time obstacle avoidance algorithm to the generate obstacle avoidance data when acquiring the first sensing data, wherein the first sensing data comprises obstacle feature data; the robot control platform is configured for acquiring all sensing data output by the sensor and the obstacle avoidance data, and generating the decision data after acquiring the all sensing data and the obstacle avoidance data, wherein the all sensing data comprise the first sensing data and other sensing data except the first sensing data; the second embedded platform is configured for immediately executing the robot motion control algorithm upon receiving the obstacle avoidance data so as to output an action instruction required for obstacle avoidance according to the obstacle avoidance data, to enable a motor configured for performing motion action in the robot to execute the action instruction to complete real-time obstacle avoidance, and for executing the robot motion control algorithm upon receiving the decision data so as to drive the motor to perform motion action adjustment according to the decision data.

2. The robot obstacle avoidance system according to claim 1, wherein
the first embedded platform is composed of a DSP+FPGA array, and the DSP performs mathematical calculation and processes tasks of real-time information data; the FPGA array is composed of multiple FPGA chips performing parallel computation simultaneously, so as to utilize a parallel data processing capability of the FPGA to process feature data from the sensor in real time to improve real-time performance;
the second embedded platform is composed of a DSP core system and an industrial communication bus system, and the second embedded platform is configured for processing and analyzing motion-control-type data from the first embedded platform and the robot control platform, and converting the data into communication data instructions recognizable by hub motor drivers and robotic arm joint drivers of the mobile operation robot for issuance, so that related actuators perform motion control, wherein the industrial communication bus comprises a CanOpen and EtherCat bus;
the first embedded platform and the second embedded platform exchange data by communication; and
the obstacle avoidance data generated by the first embedded platform has a higher processing speed and a higher real-time obstacle avoidance level than the decision data generated by the robot control platform.

3. The robot obstacle avoidance system according to claim 1, wherein the first embedded platform, in a case that the robot is in an emergency obstacle avoidance state, directly transmits obstacle avoidance data generated by the first embedded platform to the second embedded platform so as to enable the second embedded platform to output a priority obstacle avoidance instruction to make the robot avoid an obstacle in real time.

4. The robot obstacle avoidance system according to claim 1, wherein the first embedded platform transmits generated obstacle avoidance data to the robot control platform; and the robot control platform determines decision data corresponding to an obstacle and a navigation route planning of the robot, and outputs a normal operation obstacle avoidance instruction to the second embedded platform to ensure real-time obstacle avoidance operation of the robot.

5. The robot obstacle avoidance system according to claim 1, wherein the first embedded platform and the robot control platform communicate through RAM or a data bus;
the sensor is connected to the first embedded platform and the robot control platform through Ethernet or CameraLink, respectively, to realize data transmission;
the robot control platform is arranged as an x86 architecture system; and
the sensor comprises at least one of a lidar and a binocular camera, or is a preset type sensor and a combination of preset type sensors.

6. A robot real-time obstacle avoidance method, applied to the robot obstacle avoidance system according to any one of claims 1-5, **characterized in that** the robot real-time obstacle avoidance method comprises:
determining, through the first embedded platform, that the robot and an obstacle are in an emergency obstacle avoidance state according to first sensing data, then generating obstacle avoidance data within a detection range of the robot, and transmitting an emergency avoidance instruction or a deceleration instruction to the second embedded platform to control, through the second embedded platform, a motor driver to enable the robot to perform avoidance or deceleration, wherein the first sensing data comprises obstacle feature data, and the obstacle feature data comprises obstacle contour edge data and distance information data to the obstacle; and
determining, during dynamic traveling of the robot, a running state between the robot and the obstacle according to a tangential direction along an obstacle contour edge detected by the sensor, respectively detecting distances between tangents of edges on both sides of the obstacle and a sensor origin of the robot, and an included angle between the tangents of edges on both sides of the obstacle and the robot, and determining whether the robot and the obstacle are in the emergency obstacle avoidance state or a normal operation obstacle avoidance state so as to execute an obstacle avoidance decision.

7. The robot real-time obstacle avoidance method according to claim 6, wherein the robot real-time obstacle avoidance method further comprises:
the first embedded platform transmitting generated obstacle avoidance data to the robot control platform, the robot control platform determining decision data corresponding to the obstacle and a navigation route planning of the robot, and the robot control platform outputting the normal operation obstacle avoidance instruction to the second embedded platform to ensure real-time obstacle avoidance operation of the robot.

8. The robot real-time obstacle avoidance method according to claim 6, wherein the robot real-time obstacle avoidance method further comprises:
determining, by the first embedded platform based on tangent data between the robot and the obstacle, that the robot encounters two obstacles; determining that, in a first detection angle range on one side of a first obstacle, a contour tangent of another obstacle exists; and determining that, on the other side of the first obstacle, a second detection angle exists and that no contour tangent of other obstacles exists within the second detection angle, wherein the first detection angle is smaller than the second detection angle;
the first embedded platform determining first obstacle avoidance data as that the robot has a second obstacle along a direction of the first detection angle, but no second obstacle exists along a direction of the second detection angle, and the first embedded platform transmitting the first obstacle avoidance data to the robot control platform; and
the robot control platform obtaining a dynamically corrected traveling trajectory according to the first obstacle avoidance data, wherein
when the first embedded platform determines according to the obstacle feature data that the obstacle encountered by the robot changes from no obstacle to a first obstacle, or the obstacle encountered by the robot changes from one obstacle to the first obstacle and the second obstacle, the robot and the obstacle are determined to be in the emergency obstacle avoidance state, and the first obstacle is closer to the robot than the second obstacle.

9. The robot real-time obstacle avoidance method according to claim 8, wherein the robot real-time obstacle avoidance method further comprises:
the robot control platform determining, according to the first obstacle avoidance data, that detection angles corresponding to each obstacle are all within a preset range; the robot control platform determining that the robot travels according to a preset traveling route when the robot encounters each obstacle, and adjusting the robot from a first traveling direction to a corrected second traveling direction, wherein the second traveling direction is a small correction relative to the first traveling direction, so that the robot continues to travel along the preset traveling route after avoiding the obstacle; or,
the robot control platform determining that, when the robot travels to encounter each obstacle, the robot continues to travel according to the preset traveling route, wherein each obstacle comprises the first obstacle or at least one second obstacle.

10. The robot real-time obstacle avoidance method according to claim 8, wherein the robot real-time obstacle avoidance method further comprises:
detecting, by the first embedded platform, at least one obstacle within a detection range of the robot, and determining a distance of each obstacle relative to the robot based on a distance from the robot to a tangent of the obstacle;
determining whether tangents of other obstacles exist, when the robot faces a first obstacle and respectively obtains a first distance and a second distance of tangents on two sides, and when each detection angle of a third detection angle and a fourth detection angle corresponding to the two sides of the obstacle is within an extended angle range;
determining that a second obstacle exists when the tangents of other obstacles correspond to a third distance or a fourth distance, wherein the third distance or the fourth distance is respectively greater than the first distance and the second distance corresponding to the first obstacle; and/or
the robot control platform determining that the robot travels according to a preset traveling route, when the first embedded platform determines, based on obstacle contour edge data, that the robot faces one obstacle, and when a second travel angle corresponding to a second position of the robot is greater than a first travel angle corresponding to a first position, wherein the first travel angle or the second travel angle represents that the robot faces one side of the obstacle and travels correspondingly to the first position or the second position, the first travel angle is an angle between a tangent of one side corresponding to the first position of the robot and a robot travel axis, and the second travel angle is an angle between a tangent of one side corresponding to the second position of the robot and the robot travel axis, wherein the robot travel axis represents as an axis between the first position and the second position when the robot is respectively located at the first position and the second position; and
the robot is in straight-line traveling between the second position and the first position, and the second position is closer to the robot relative to the first position.
